# EUROPÄISCHE PATENTSCHRIFT

(11) **EP 1 562 050 B1**
(45) Veröffentlichungstag und Bekanntmachung des Hinweises auf die Patenterteilung: **17.06.2009**
(21) Anmeldenummer: 05100025.5
(22) Anmeldetag: 04.01.2005
(51) Int. Cl.: G01S 7/52, G01S 7/527

(54) **Verfahren und Vorrichtung zur Anpassung eines Schwellwertes einer Detektionseinrichtung**
Method and apparatus for adapting a threshold in a detection unit
Procédé et dispositif pour adapter un seuil dans un disposif de détection

(30) Priorität: 06.02.2004 DE 102004006015
(43) Veröffentlichungstag der Anmeldung: 10.08.2005
(73) Patentinhaber: Robert Bosch GmbH, 70442 Stuttgart (DE)
(72) Erfinder: Reiche, Martin, 74321, Bietigheim (DE)

(56) Entgegenhaltungen:
- WO-A-02/48737
- DE-A1- 3 937 585
- DE-A1- 4 208 595
- DE-A1- 19 645 339
- US-A- 4 036 057
- US-A- 4 785 664
- US-A- 5 323 361
- US-A1- 2003 039 171

## Beschreibung

### STAND DER TECHNIK

Die vorliegende Erfindung betrifft ein Verfahren und eine Vorrichtung zur Anpassung eines Schwellwertes einer Detektionseinrichtung und insbesondere ein Verfahren und eine Vorrichtung zur Anpassung eines Schwellwerts, basierend auf einem Ultraschall-System zur Fahrzeugumfelddetektion.

Detektions-Einrichtungen sind gerade im Fahrzeugbau einer steigenden Nachfrage ausgesetzt. Zur Fahrzeugumfelddetektion werden dabei vorzugsweise Ultraschall-Systeme eingesetzt.

Aus der DE 19645339 ist ein Ultraschall-Parkhilfe-System und ein Verfahren zur von den Fahrzeugdaten abhängigen Abstandsmessung aus einem Fahrzeug bekannt. Dieses System gibt ein Warnsignal ab, wenn ein innerhalb eines Zeitfensters, welches einen Messbereich festlegt, liegendes Echo-Signal einen bestimmten Schwellwert überschreitet. Gemäß der Deutschen Offenlegungsschrift wird eine statische Schwellwertkennlinie mit einer vorbestimmten Anzahl von Stützstellen typischerweise mit Beginn des Einparkvorgangs aus einem Steuergerät über eine Sender-/Empfänger-Leitung zu einem Sensor übertragen. Eine statische Schwelle kann nach zwei Gesichtspunkten ausgelegt werden: Zum einen optimiert auf einen minimalen Fehlalarm durch Rausch- und Störquellen, welches mit einem hohen Schwellenpegel einhergeht, wobei eine geringe Sensitivität bzw. Reichweite des Detektions-Systems in Abhängigkeit von der reflektierenden Größe des zu detektierenden Objektes folgert. Zum anderen besteht die Möglichkeit, eine hohe Sensitivität des Systems dadurch bereitzustellen, dass die Schwelle nahe der Rausch-/Clutter-Grenze gelegt wird, wobei durch eine temporär hinzutretende Störquelle bzw. temporäre Störeinflüsse ein Systemausstieg auf Grund von "Geister"-Hindernissen resultiert.

Mit Clutter bzw. Boden-Clutter werden Reflexionen eines Ultraschall-Signales, beispielsweise verursacht durch Splitt oder Kies, bezeichnet. Die Auslegung einer statischen Schwellwert-Kennlinie ist folglich ein Kompromiss zwischen den Aspekten der möglichst guten Sensitivität und der noch akzeptierbaren Fehlalarmrate unter "worst case" Umgebungsbedingung. Rauschen wird durch die elektronische Empfangs-Verstärkung des Wandlersignals verursacht und bestimmt die "best case" Empfindlichkeitsgrenze bzw. die niedrigst mögliche Schwelle.

Der Einsatz einer adaptiven Schwelle auf Basis einer binären, das heißt, digitalen Auswertung auf Steuergerätebene ist aus zwei Gründen ebenfalls nicht möglich: Zum einen sind die Spurauswertungen im Steuergerät und eine auftretende Totzeit bei der Übertragung nicht kompatibel mit den Latenzzeit-Anforderungen erweiterter Detektionssystemfunktionen, wie beispielsweise dem autonomen Anfahren oder einer Detektion im Bereich des "toten" Winkels. Andererseits weist die übertragene zeitanaloge wertbinäre Information vom Sensor, das heißt, von der Sende-/Empfänger-Einheit zum Steuergerät lediglich einen radialen Hindernis- bzw. Clutter-Abstand, jedoch keine Quantisierung der Magnitude bzw. des Betrags des Clutter- bzw. Rausch-Niveaus auf. Damit ist keine geeignete adaptive Schwellen-Anpassung im Steuergerät möglich, da kein Unterscheidungs-Kriterium zwischen einem Zielobjekt und Clutter, d. h. Stör-Reflexionen, gegeben ist.

Die erweiterten Detektionssystemfunktionen sollen jedoch auch in einem dynamischen Umfeld einsetzbar sein, in welchem sich das akustische Stömiveau schnell ändern kann, beispielsweise durch vorbeifahrende Störer wie Zweitakt-Motorräder, Windgeräusche und/oder sogenannte Mikrophonics, welche von der Motorlast bzw. Motordrehzahl oder anderen Fahrzeugvibrationen abhängen.

Die US 2003/0039171 A1 zeigt einen Puls-Echo-Sonarscanner für einen mobilen Roboter, bei dem ein akustischer Signalpuls erzeugt und ausgesendet wird und ein reflektiertes Echo empfangen wird. Vor der Aussendung des Signalpulses erfolgt eine Messung des Hintergrundgeräuschs, wobei entsprechende Werte des Hintergrundrauschens gespeichert werden. Die Hintergrundmessung schließt sich an eine Eigenkalibrierung des Sensors an. In einer weiteren Ausführungsform wird eine Schallmessung während eines Aussendens von Schallsignalen durchgeführt.

Aus der DE 42 085 95 A1 ist eine Einrichtung zur Abstandsmessung mit Ultraschall bekannt, bei der ein Sender ein impulsförmiges Signal abgibt, das reflektiert und in einem Empfänger in ein elektrisches Echo-Signal gewandelt wird. Hierbei wird eine Veränderung einer Schaltschwelle bzw. eine Veränderung der Verstärkung des Echosignals oder eine Beeinflussung des abgestrahlten Signals in Abhängigkeit von einem zuvor empfangenen Echosignal durchgeführt, um Ungenauigkeiten bei der Auswertung des Echosignals zu vermeiden.

### VORTEILE DER EREINDUNG

Das erfindungsgemäße Verfahren zur Anpassung eines Schwellwertes einer Detektionscinrichtung sowie die erfindungsgemäße Vorrichtung mit den Merkmalen des Anspruchs der nebengeordneten Ansprüche weisen gegenüber dem bekannten Lösungsansatz den Vorteil auf, dass eine adaptive Schwellenregelung bereitgestellt wird, wobei die Dutcktionnsschwelle abhängig von äußeren Begebenheiten vom System variiert wird. Eine Unterscheidung zwischen einem Hindernis und störsignalen wird ermöglicht, sodass sowohl ein minimaler Fehlalarm verursacht durch Störquellen als auch eine hohe Sensitivität des Systems gewährleistet werden kann.

Die der vorliegenden Erfindung zugrunde liegende Idee besteht im Wesentlichen darin, eine Störpegelmessung in einem Zeitintervall durchzuführen, in welchem kein reflektiertes Messsignal erwartet wird. Somit wird eine adaptive Schwellenregelung ermöglicht, deren Detektionsschwelle bzw. Stellgröße in einem Zeitbereich, vorzugsweise am Ende eines Messzyklus, erfasst wird, in welchem kein reflektiertes Nutzsignal mit einem entsprechend hohen Signalpegel vorkommt. Dabei nutzt man die Eigenschaft aus, dass die meisten Fremdstörer (Windgeräusche, vorbeifahrende Fahrzeuge, Microphonics) zeitlich über den gesamten Messzyklus mit konstantem Pegel auftreten, während Nutzsignale von Ziclobjekten zum Ende eines Messzyklus aufgrund der mit der Laufzeit verbundenen Objektentfernung und der damit verbundene quadratisch zunehmenden Entfernungsdämpfung verschwindend klein werden.
Weiterhin haben Nutzsignale von reflektierenden Objekten auf einem demodulierten Empfangssignal die Eigenschaft eines Peaks, dessen charakteristische Breite von der Breite des Sendebursts abhängt. Demgegenüber ist der Verlauf des Störpegels nahezu konstant. Somit sind über ihre Zeitkonstante Nutzziel und konstante Störer unterscheidbar.

Mit anderen Worten wird ein Verfahren zur Anpassung eines Schwellwertes einer Detektionseinrichtung mit den folgenden Schritten bereitgestellt: Senden eines Signalbursts mit einem vorbestimmtem Pulswiederholintervall, einer definierten Burstlänge und einer definierten Signalfrequenz; Empfangen und Aufbereiten eines Empfangssignals, insbesondere durch Verstärkung, Filterung und Demodulation zur Gewinnung der Einhüllenden; Ermitteln einer Empfangssignalmagnitude als Störpegelprobe nach einer ersten vorbestimmten Zeitdauer ab einem Signalburst innerhalb einer vorbestimmten zweiten Zeitdauer aus dem Empfangssignal, vorzugsweise am Ende des Pulswiederholintervalls; und Anpassen eines Schwellwertes der Detektionseinrichtung in Abhängigkeit von der Störpegelprobe.

In den Unteransprüchen finden sich vorteilhafte Weiterbildungen und Ausgestaltungen des in den nebengeordneten Ansprüchen angegebenen Verfahrens und der Vorrichtung zur Anpassung eines Schwellwertes einer Detektionseinrichtung.

Erfindungsgemäß wird die Störpegelprobe aus der Einhüllenden des zeitlich gefensterten Empfangssignals am Ende des Pulswiederholintervalls mittels eines Spitzenwertgleichrichters ermittelt, wobei der Spitzenwertgleichrichter eine IIaltezeitkonstante aufweist, welche größer als das Pulswiederholintervall PRI ist. Durch den Einsatz eines Spitzenwertgleichrichters wird vorteilhaft auf einfache Weise das Maximum der Einhüllenden des zeitlich gefensterten Empfangssignals ermittelt und für eine vorbestimmte Zeit gespeichert, wobei bei einer entsprechend gewählten Haltezeitkonstante der maximale Empfangssignalpegel der erfindungsgemäß ermittelten Rausch- bzw. Störpegelprobe über den Mess-Zyklus für eine vorbestimmte Zeit weitgehend konstant beibehalten wird. Diese Haltezeitkonstante des Spitzenwertgleichrichters bestimmt die Rcaktionsfähigkeit der Adaption auf sich zeitlich ändernde Umgebungsbedingungen.

Erfindungsgemäß wird der Spitzenwertgleichrichters ferner so ausgelegt, dass seine Ladezeitkonstante die Burstlänge überschreitet und seine Haltezeitkonstante länger als die Pulswiederholrate ist und die zeitliche Störpegelproben-Erfassungsdauer länger als die Ladezeitkonstante ist. Somit kann die Rauschprobenermittlung dem Verlauf eines Nutzsignals, d.h. einem Empfangspeak verursacht durch eine Objektreflektion nicht oder nur eingeschränkt folgen. Die Ladezeitkonstante ist jedoch klein gegenüber dem zeitlichen Verlauf der Dynamik des Störpegels (z.B. in Abhängigkeit von vorbeifahrenden Störquellen) und kann diesem innerhalb des gewählten Zeit-Fensters der Rauschprobe problemlos folgen. Somit ergibt sich, dass die Lange des Zeitfensters der Rauschprobe größer sein muss als die Ladezeitkonstante, damit sich innerhalb dieses Intervalls der Spitzenwertgleichrichter auf das Maximum der Magnitude der Einhüllenden des Empfangssignals aufladen kann.

Gemäß einer weiteren bevorzugten Weiterbildung legt eine Timer-Einrichtung die erste vorbestimmte Zeitdauer, vorzugsweise 35ms bis 55ms, fest, welche mit dem vorbestimmten Puls-Takt, vorzugsweise mit einer Taktfrequenz von 15 Hz bis 30 Hz, getriggert wird. Dies birgt den Vorteil, dass durch den Timer-Baustein, welcher vorzugsweise durch eine Sende-Anforderung getriggert wird, nach einer vorbestimmten Zeit nach dem Sende-Trigger, d. h. nach dem Aussenden eines Signal-Pulses, den Eingang einer Detektionseinrichtung, vorzugsweise des Spitzenwertgleichrichters, zur Erfassung des Empfangssignalmaximums freigibt und diesen wieder durch einen darauffolgenden Sende-Trigger verriegelt. Der Timerbaustein kann vorzugsweise einfach und kostengünstig durch ein Monoflop realisiert werden.

Gemäß einer weiteren bevorzugten Weiterbildung wird auf die ermittelte Rauschprobe ein vorbestimmter Schwellwert addiert, wobei der vorbestimmte Schwellwert einen Zeitverlauf programmierter Stützstellen im Sinne einer statischen Kennlinie aufweist. Somit wird auf vorteilhafte Weise ein dynamischer Ausgangsschwellwert bereitgestellt, welcher sowohl eine statische als auch eine von der Empfangssignalmagnitude abhängige dynamische Komponente enthält. Der statische Anteil dient dazu, die Überhöhung des Störniveaus durch Bodenclutter abzufangen , welcher orts- und damit zeitfest je nach Sensoreinbauhöhe und Anstellwinkel in einem typischen Bereich von 1 bis 2m Abstand bzw. in einem Zeitfenster von ca. 6 bis 12ms auftritt.

Gemäß einer weiteren bevorzugten Weiterbildung wird das Empfangssignal nach einer Verstärkung mit einem Bandpass-Filter, vorzugsweise mit einer Mittenfrequenz auf der Resonz ― bzw. Sendefrequenz eines Transducers- und einer Durchlass-Bandbreite proportional dem Kehrwert der Burstlänge Δt gefiltert und insbesondere mittels einem Zweiwege-Gleichrichter und einem Tiefpass-Filter die Einhüllende demoduliert, bevor daraus die Rauschprobe ermittelt wird. Die aus dynamischem und statischen Anteil ermittelte Schwelle wird ebenfalls vorzugsweise auf diese Einhüllende angewendet. Dies birgt den Vorteil einer einfach realisierbaren und effektiv arbeitenden Signalaufbereitung in der Detektionseinrichtung. Die Notwendigkeit einer spiegelbildlichen Schwelle zur Anwendung auf das bipolare Empfangssignal mit Träger wird dadurch umgangen.
a) Gemäß einer weiteren bevorzugten Weiterbildung wird im Sinne eines Optimalempfängers die Signalaufbereitung eine I/Q-Demodulation, eine Kreuzkorrelation eines I- und Q-Kanals mit idealer zeit- und insbesondere auch dopplerverschobener Replica des Sendesignals, und eine Bildung des Betrags aus der Summe der Quadrate der Kreuzkorrelationen des I- und Q-Kanals sowie eine Normierung des Betrags mit der Autokorrelation der Replica ausgeführt. Dieser normierte Betrag als Ausgangssignal des Optimalempfängers entspricht dem Ausgang des Tiefpasses nach dem Zweiwegegleichrichter in der obigen einfachen Realisierung.

Gemäß einer weiteren bevorzugten Weiterbildung weist die Sende-/Empfangs-Einrichtung einen Transducer zum Aussenden von Signalpulsen mit einer Signalfrequenz zwischen 40 KHz und 100 KHz, vorzugsweise mit einer Pulslänge von 150µs bis 500µs, und insbesondere einer Pulswiederholrate von 10 Hz bis 30 Hz, und zum Empfangen eines analogen akustischen Empfangssignals auf. Auf diese Weise wird ein insbesondere für den Kraftfahrzeuggebrauch einsetzbares Ultraschall-basiertes System mit adaptiver Schwellenanpassung vorteilhaft bereitgestellt.

Gemäß einer weiteren bevorzugten Weiterbildung ist eine Additions-Einrichtung zum Addieren der Empfangssignalmagnitude als Störpegelprobe mit einem vorbestimmten Schwellwert, welcher vorzugsweise einen vorbestimmten Zeitverlauf, insbesondere mit der Pulswiederholrate beaufschlagt, aufweist, zu einem resultierenden dynamischen Schwellwert vorgesehen.

Gemäß einer weiteren bevorzugten Weiterbildung ist ein Komparator zum Erzeugen eines wertbinären Detektions-Signals durch einen Vergleich des demodulierten Empfangssignals mit dem dynamischen Schwellwert vorgesehen. Dies birgt den Vorteil einer kostengünstig realisierbaren Detektionseinrichtung mit dynamischem Detektionsschwellwert, wobei ein binärer Wert (Hindernis vorhanden bzw. Hindernis nicht vorhanden) zeitanalog ausgegeben wird.

### ZEICHNUNGEN

Ein Ausführungsbeispiel der Erfindung ist in den Zeichnungen dargestellt und in der nachfolgenden Beschreibung näher erläutert.

Es zeigen:
Fig.1 Ein schematisches Blockschaltbild einer Detektionsvorrichtung mit adaptivem Detektions-Schwellwert zur Erläuterung einer Ausführungsform der vorliegenden Erfindung; und
Fig. 2a-c jeweils ein schematisches Signal-Diagramm über der Zeit t nach verschiedenen Signal-Bearbeitungsschritten.

### BESCHREIBUNG DES AUSFÜHRUNGSBEISPIELS

In den Figuren bezeichnen gleiche Bezugszeichen gleiche oder funktionsgleiche Bestandteile.

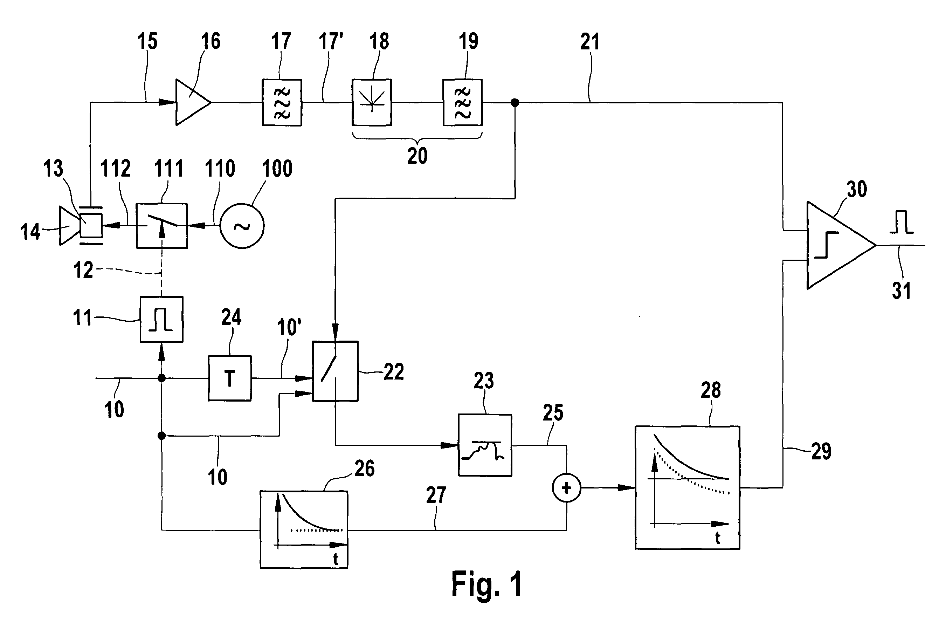

In Fig. 1 ist schematisch ein Block-Diagramm dargestellt, in welchem ein Pulswiederhol-Takt 10 (puls repetition intervall PRI) einer Signal-Modifikationseinrichtung 11 zugeführt wird. Die Signal-Modifikationseinrichtung 11 modifiziert die Signalform und insbesondere die Signaldauer, vorzugsweise zu einem Rechteckpuls mit einer Breite Δt zwischen 100µs und 1ms, insbesondere 300µs. Die Signal-Modifikationseinrichtung 11, insbesondere ein Pulsformer, bestimmt Δt und kann anstatt eines Rechteckpulses gemäß eines alternativen Ausführungsbeispiels eine andere Pulsform z.B. eine Gaussfunktion Q(t) = exp(-π (t/Δt)²) als Einhüllende realisieren.

Die Signal-Modifikationseinrichtung 11 steuert das Trägersignal 110 eines Sendegenerators 100 über eine Schalteinrichtung 111 oder gemäß dem alternativen Ausführungsbeispiel über einen AM-Modulator 111' durch. Der Sendegenerator 100 wird bei einer vorbestimmten Frequenz, vorzugsweise im Bereich zwischen 40 KHz und 100 KHz , insbesondere etwa 50 KHz, betrieben. Die von der Signal-Modifikationseinrichtung 11 angesteuerte Schalteinrichtung 111 bzw. der AM-Modulator 111' steuert über einen zu sendenden Signalpuls 112 eine Sende-/ Empfangseinrichtung 13, vorzugsweise einen akustischen Transducer, im Sendebetrieb an. Der Puls-Takt 10 weist eine Puls-Wiederholrate bzw. ein pulse repetition interval (PRI) zwischen 35ms und 60ms, vorzugsweise etwa 50ms, auf. Die Sende- bzw. Empfangseinrichtung 13 gibt angesteuert durch den SignalPuls 112 ein Sende-Signal 14 mit der vorbestimmten Frequenz aus, welches gemäß dem alternativen Ausführungsbeispiel eine entsprechende Einhüllende aufweist.

Gleichzeitig empfängt die Sende-/Empfangs-Einrichtung 13 ein Empfangssignal 15, welches vorzugsweise einer Verstärker-Einrichtung 16 zugeführt wird. Auf die Verstärkung des analogen Empfangssignals 15 in der Verstärkereinrichtung 16 folgt eine Filterung mit einer Filtereinrichtung 17, vorzugsweise ein Bandpass-Filter, welches insbesondere eine Mittenfrequenz aufweist, die der Signalfrequenz des Sendepulses 14 entspricht und insbesondere eine Durchlass-Bandbreite proportional dem Kehrwert der Burstlänge 1/Δt aufweist. Das entsprechend gefilterte Empfangssignal 17' wird daraufhin einem Zweiwege-Gleichrichter 18 mit integriertem Tiefpass 19 zugeführt. Das gefilterte Empfangssignal 17' wird in dieser nonkohärenten Demodulationseinrichtung 20, bestehend aus dem Zweiwege-Gleichrichter 18 und dem Tiefpass-Filter 19 vorzugsweise Amplitudendemoduliert. Somit wird aus dem gefilterten Empfangssignal 17' ein demoduliertes Empfangssignal 21, welches der Einhüllenden des gefilterten Empfangssignals 17', d.h. des Trägersignals, entspricht. Im Zweiwege-Gleichrichter 18 wird ein Signal mit lediglich positiven Halbwellen gewonnen, wobei die Tiefpass-Filterung im Tiefpass-Filter 19 hochfrequente Spektren ausfiltert.

Das demodulierte Eingangs-Signal 21 wird daraufhin über eine Schalteinrichtung 22, vorzugsweise einem Feldeffekt-Transistor, zu einer Amplituden-Detektionseinrichtung 23, vorzugsweise einem Spitzenwertgleichrichter geführt. Die Schalt-Einrichtung 22 wird vom Puls-Takt 10 angesteuert, welcher jedoch über eine Timer-Einrichtung 24, insbesondere ein Totzeitglied, um eine vorbestimmte Zeitdauer, zum Beispiel etwa 45ms verzögert. Die Schalteinrichtung schaltet das demodulierte Empfangssignal 21 daraufhin entsprechend dem verzögerten Puls-Takt 10' durch zur Amplituden-Detektionseinrichtung 23, bis der nächste nicht verzögerte Pulstakt 10 als Reset die Schalt-Einrichtung 22 wieder öffnet. Somit wird eine Empfangssignalmagnitude 25 durch die Amplituden- Detektionseinrichtung 23, vorzugsweise durch den Spitzenwertgleichrichter, nach einer ersten vorbestimmten Zeitspanne ab einem Puls-Takt während einem zweiten vorbestimmten Zeitintervall, vorzugsweise bis zum darauffolgenden Puls-Takt, identifiziert.

Im Sinne eines Optimalempfängers kann die Signalaufbereitung aber auch aufwendiger erfolgen.
Dabei sind folgende Verarbeitungsschritte denkbar, die sowohl in Hardware als auch in Software bei entsprechend ausreichender Abtastung des Empfangssignals 15 realisiert werden können:
b)
   a) I/Q-Demodulation
   b) Kreuz-Korrelation des I- und Q-Kanals mit idealer zeit- und gegebenenfalls auch dopplerverschobener Replica des Sendesignals
   c) Bildung des Betrags aus der Summe der Quadrate der Kreuzkorrelationen des I-und Q-Kanals
   d) Normierung des Betrags mit der Autokorrelation der Replica

Dieser normierte Betrag als Ausgangssignal des Optimalempfängers entspricht dem Ausgangssignal 21 des Tiefpasses nach dem Zweiwegegleichrichter 18 in der obigen einfachen Realisierung.

Legt man eine Ultraschall-Umfelddetektionseinrichtung zu Grunde, so resultiert aus einer Verzögerung durch die Timer-Einrichtung 24 von beispielsweise etwa 45ms, bei einer Schallgeschwindigkeit in Luft von etwa 330m/s, das die Amplituden-Detektionseinrichtung 23 den maximalen Signalpegel einer Signalprobe im Abstandsbereich von etwas 7,7 bis 8,5 m detektiert. Geht man davon aus, dass dieser Amplitudenwert, welcher in diesem vorbestimmten Zeitfenster auftritt, von einer Störquelle herrührt und nicht von einem an einem Hindernis reflektierten Sendepuls erzeugt wurde, so lässt sich aus dieser Empfangssignalmagnitude als Störpegelprobe 25 eine adaptive Detektionsschwelle ableiten.

Die Schallfeldintensität eines reflektierten Sendepulses ist in der Regel nicht ausreichend, um ein eindeutig detektierbares Empfangssignal für typische Hindernisse bzw. Ziele mit Abständen >7 m zu erzeugen. Gegebenenfalls kann auch die Wiederholrate des Puls-Taktes 10 beispielsweise von 20 Hz auf 16 Hz abgesenkt werden und die Zeitverzögerung durch die Timer-Einrichtung 24 entsprechend von 45ms auf beispielsweise 55 ms vergrößert werden, wodurch die Rauschprobe weiter verzögert wird und einen entsprechend weiter entfernten Abstandsbereich bedeuten würde. Weiterhin gewährleistet die Wahl der Ladezeitkonstanten, dass Nutz-Signale von Objektreflcktionen nur unwesentlich zum Aufladen des Spitzenwerts auch Störniveau beitragen.

Die Amplituden-Detektionseinrichtung 23, erfindungsgemäß der Spitzenwertgleichrichter, weist eine Zeitkonstante auf, welche insbesondere 240ms beträgt und somit die Pulswiederholrate 10, d.h. den Puls-Takt, nahezu um das Fünffache übersteigt und folglich die Empfangssignalmagnitude als Störpegelprobe 25, d.h. den maximalen Rauschprobenpegel, über den Messzyklus nach dem Öffnen der Schalteinrichtung 22 weitgehend konstant aufrechterhält. Diese Zeitkonstante der Amplituden-Detcktionseinrichtung 23 bestimmt die Reaktionsfähigkeit der Adaption z.B. auf dynamisch sich ändernde Umgebungsgeräusche. Der Spitzenwertgleichrichter 23 wird so ausgelegt, dass seine Ladezeitkonstante t_{charge} die Burstlänge Δt überschreitet, seine Haltezeitkonstante t_{hold} länger als die Pulswiederholrate PRI ist, und die zeitliche Störpegelproben-Erfassungsdauer T_{prode} länger als die Ladezeitkonstante t_{charge} ist. Somit kann die Rauschprobenermittlung dem Verlauf eines Nutzsignals, d.h. einem Empfangspeak verursacht durch eine Objektreflektion nicht oder nur eingeschränkt folgen. Die Ladezeitkonstante t_{charge} ist jedoch klein gegenüber dem zeitlichen Verlauf der Dynamik des Störpegels (z.B. in Abhängigkeit von vorbeifahrenden Störquellen) und kann diesem innerhalb des gewählten Zeit-Fensters T_{probe} der Rauschprobe problemlos folgen. Somit ergibt sich, dass die Länge des Zeitfensters T_{probe} der Rauschprobe größer sein muss als die Ladezeitkonstante t_{charge}, damit sich innerhalb dieses Intervalls der Spitzenwertgleichrichter 23 auf das Maximum der Magnitude der Einhüllende des Empfangssignals auflagen kann (t_{hold} > PRI, t_{charge} > Δt, T_{probe} > t_{charge}). Als Auslegungsbeispiel dient: PRI = 50ms, Δt = 300µs, t_{charge} = 5ms, t_{hold} = 300ms, T_{prube} = 8ms (zwischen 42..50ms jeweils nach Senden eines Bursts).

Der Puls-Takt 10 geht außerdem einer statischen Schwellwerterterzcugungeinrichtung 26 zu und triggert diese. Die statische Schwellwerterzcugungseinrichtung 26 weist die Möglichkeit auf, über programmierte Stützstellen einen vorbestimmten Zeitverlauf der statischen Schwelle vorzugeben. Über eine Additionseinrichtung + wird die Rauschprobe 25 mit einem statischen Schwellwert 27 addiert. Daraus resultiert ein um die Empfangssignalmagnitude als Störpegelprobe 25 angehobener statischer Schwellwert 27, welches im Block 28 gemäß Fig. 1 veranschaulicht ist. In einem Komparator 30 als Vergleichseinrichtung wird daraufhin das demodulierte Empfangssignal 21 und ein aus der Addition der statischen Schwelle 27 mit der Störpegelprobe 25 entstehender adaptiver Schwellwert 29 verglichen. Aus dem Vergleichen der Vergleichseinrichtung 30 resultiert ein binäres, d.h. digitales Detektionssignal 31, welches einen High-Pegel aufweist, wenn das demodulierte Empfangssignal 21 einen Pegel aufweist, welcher über dem adaptiven Schwellwert 29 liegt. Die dynamische Schwelle 29, welche den Offset der Empfangssignalmagnitude als Störpegelprobe 25 abhängig von der über die Schalteinrichtung 22 zugeführten Rauschprobe bestimmt, ermöglicht somit eine Anpassung der Empfindlichkeit der Detektionseinrichtung, abhängig von auftretenden Störquellen bzw. Störgrößen. Vorzugsweise wird die Empfangssignalmagnitude als Störpegelprobe 25 beispielsweise um einen Pegel von 10 dB durch eine Multiplikation mit einem festen Wert angehoben. Dies entspricht einer Fehlalarmrate von etwa 4.5E-5 im Fall von weißem Rauschen.

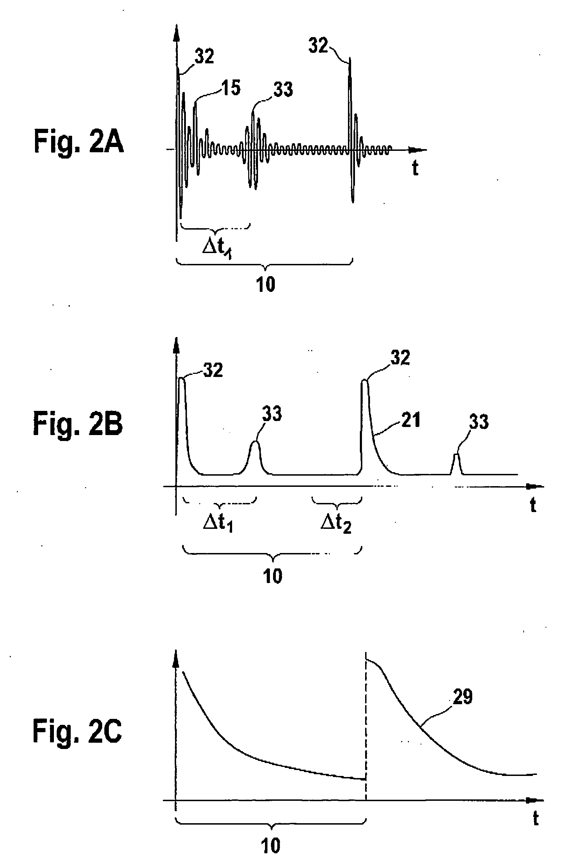

In Fig. 2a ist exemplarisch ein von der Sende-/Empfangs-Einrichtung 13 empfangenes Empfangssignal 15 über der Zeit t dargestellt. Ein durch den Sendeburst bzw. den Signalpuls 12 erzeugtes Amplitudenmaximum im Bereich der Ordinate klingt exponentiell ab, woraufhin gemäß Fig. 2a ein Amplitudenanstieg im mittleren Bereich zwischen den zwei Signalpulsen 32 erfolgt, welcher von einem reflektiertem Signalpuls 33 herrührt. Entsprechend dem Puls-Takt 10 wiederholt sich das Bild. Die Zeitdauer Δ t₁ zwischen dem Auftreten des gesendeten Signalpulses 32 und dem empfangenen Signalpuls 33 als Zeitdauer ergibt multipliziert mit der Schallgeschwindigkeit in Luft den Abstand zu einem Hindernis.

In Fig. 2b ist das demodulierte Empfangssignal 21 gemäß Fig. 1 dargestellt. Daraus wird im Vergleich zu Fig. 2a ersichtlich, dass in der Signalaufbereitungseinrichtung 16, 17, 18 und 19 gemäß Fig. 1 das Empfangssignal 15 gefiltert und lediglich mit positiven Signalwerten versehen ist. In der Zeitperiode Δ t₂ ist die Schalteinrichtung 22 gemäß Fig. 1 durchgeschaltet, und die Amplitudendetektionseinrichtung 23 erfasst eine Störpegelprobe 25. Fig. 2c stellt schematisch eine entsprechende dynamische Schwelle 29 gemäß Fig. 1 dar.

Obwohl die vorliegende Erfindung vorstehend an Hand eines bevorzugten Ausführungsbeispiels beschrieben wurden, ist sie darauf nicht beschränkt, sondern auf vielfältige Weise modifizierbar. So sind neben Ultraschall-Detektionseinrichtungen auch andere Detektionseinrichtungen, beispielsweise im Radar-Spektrum gemäß der vorliegenden Erfindung mit einem dynamischen Schwellwert ausstattbar. Die angegebenen Zeitdauern bzw. Frequenzwerte sind folglich lediglich beispielhaft zu betrachten und können z.B. auch im ns-Bereich bzw. GHz-Bereich liegen. Obwohl mit Bezug auf eine FahrzeugumfeldDetektion insbesondere ein Personenkraftwagen beschrieben, ist die vorliegende Erfindung auf beliebige Detektionseinrichtungen anwendbar.

## Patentansprüche

1. Verfahren zur Anpassung eines Schwellwertes (29) einer Detektionseinrichtung vorzugsweise in einem Ultraschallsystem zur Fahrzeugumfelddetektion mit den folgenden Schritten:
Senden eines Signalbursts (12) mit einem vorbestimmtem Pulswiederholintervall (10), einer definierten Burstlänge und einer definierten Signalfrequenz, Empfangen und Aufbereiten eines Empfangssignals (15) durch Verstärkung, Filterung und Demodulation zur Gewinnung einer Einhüllenden,
Ermitteln einer Empfangssignalmagnitude der Einhüllenden als Störpegelprobe (25) nach einer ersten vorbestimmten Zeitdauer (Δt₁) ab einem Slgnalburst (12) innerhalb einer vorbestimmten zweiten Zeitdauer (Δt₂) aus dem aufbereiteten Empfangssignal (15) am Ende des Pulswiederholintervalls (10), und Anpassen des Schwellwertes (29) der Detektionseinrichtung in Abhängigkeit von der Störpegelprobe (25), **dadurch gekennzeichnet, dass** die
Empfangssignalmagnitude der Einhüllenden als Störpegelprobe (25) aus der Einhüllenden des zeitlich gefensterten Empfangssignals (15) am Ende des Pulswiederholintervalls (10) mittels eines Spitzenwertglelchrichters (23) ermittelt wird, dass der Spitzenwertgleichrichter (23) eine Haltezeitkonstante aufweist, welche größer als das Pulswiederholintervall (10) ist und dass der Spitzenwertgleichrichter (23) so ausgelegt wird, dass seine Ladezeitkonstante die Burstlänge überschreitet und dass die zeitliche Störpegelproben-Erfassungsdauer länger als die Ladezeitkonstante ist.

2. Verfahren nach einem der vorangehenden Ansprüche, **dadurch gekennzeichnet, dass** eine Timer-Einrichtung (24) die erste vorbestimmte Zeitdauer( Δt₁), vorzugsweise 35 ms bis 55 ms, festlegt, welche mit der vorbestimmten Pulswiederholintervall (10), vorzugsweise mit einer Taktfrequenz von 15 Hz bis 30 Hz, getriggert wird.

3. Verfahren nach einem der vorangehenden Ansprüche, **dadurch gekennzeichnet, dass** auf die Empfangssignalmagnitude der Einhüllenden als ermittelte Störpegelprobe (25) ein vorbestimmter Schwellwert (27) addiert wird, wobei der vorbestimmte Schwellwert (27) einen Zeitverlauf programmierter Stützstellen im Sinne einer statischen Kennlinie aufweist.

4. Verfahren nach einem der vorangehenden Ansprüche, **dadurch gekennzeichnet, dass** das Empfangssignal (15) nach einer Verstärkung mit einem Bandpass-Filter (17), vorzugsweise mit einer Mittenfrequenz auf der Resonanz - bzw. Sendefrequenz des Transducers- und einer Durchlass-Bandbreite proportional dem Kehrwert der Burstlänge (At) gefiltert wird und insbesondere mittels einem Zweiwege-Gleichrichter (18) und einem Tiefpass-Filter (19) die Einhüllende demoduliert wird, bevor daraus die Störpegelprobe (25) ermittelt wird.

5. Vorrichtung zur Anpassung eines Schwellwertes einer Detektionseinrichtung, vorzugsweise in einem Ultraschallsystem zur Fahrzeugumfelddetektion, mit einer Sende-/Empfangseinrichtung (13) zum Senden eines Sendebursts (14) mit einer vorbestimmten Pulswiederholrate (10) und einer vorbestimmten Signalfrequenz und zum Empfangen eines Empfangssignals (15), mit einer Signalaufbereitungseinrichtung (16, 17, 18, 19) zum Aufbereiten des Empfangssignals (15) durch Verstärkung, Filterung und Demodulation zur Gewinnung einer Einhüllenden, mit einer Detektionseinrichtung (22, 23, 24) zum Ermitteln einer Empfangssignalmagnitude der Einhüllenden als Störpegelprobe (25) nach einer ersten vorbestimmten Zeitdauer (Δt₁) ab einem Signalburst (12) innerhalb einer vorbestimmten zweiten Zeitdauer (Δt₂) aus dem Empfangssignal (15) am Ende eines Pulswiederholintervalls (10) und mit einer Steuereinrichtung (26, +) zum Anpassen des Schwellwertes (29) der Detektionseinrichtung in Abhängigkeit von der detektierten Empfangssignalmagnitude der Einhüllenden als Störpegelprobe (25), **gekennzeichnet durch** einen Spitzenwertgleichrichter (23) zum Ermitteln der Empfangssignalmagnitude der Einhüllenden als Störpegelprobe (25) aus der Einhüllenden des zeitlich gefensterten Empfangssignals (15) am Ende des Pulswiederholintervalls (10), wobei der Spitzenwertgleichrichter (23) eine Haltezeitkonstante aufweist, welche größer als das Pulswiederholintervall (10) ist und wobei der Spitzenwertgleichrichter (23) so ausgelegt ist, dass seine Ladezeitkonstante die Burstlänge überschreitet und dass die zeitliche Störpegelproben-Erfassungsdauer länger als die Ladezeitkonstante ist.

6. Vorrichtung nach Anspruch 5, **dadurch gekennzeichnet, dass** die Sende- /Empfangseinrichtung (13) einen Transducer zum Aussenden von akustischen Sendebursts (14) mit einer Signalfrequenz zwischen 40 KHz und 100 KHz, vorzugsweise mit einer Pulslänge von 150 µs bis 500 µs und einer Pulswiederholrate von 10 Hz bis 30 Hz, und zum Empfangen eines analogen akustischen Empfangssignals (15) aufweist.

7. Vorrichtung nach Anspruch 5 oder 6, **dadurch gekennzeichnet, dass** der Spitzenwertgleichrichter (23) die Empfangssignalmagnitude der Einhüllenden als Störpegelprobe (25) aus dem Empfangssignal (15) in Abhängigkeit von der Freigabe durch eine Timer- Einrichtung (24) ermittelt.

8. Vorrichtung nach einem der Ansprüche 5-7, **dadurch gekennzeichnet, dass** die Signalaufbereitungseinrichtung (16, 17, 18, 19) eine Verstärkereinrichtung (16), eine Bandpass-Filtereinrichtung (17) und eine Demodulationseinrichtung (20) zum Erzeugen eines demodulierten Empfangssignals (21) aufweist.

9. Vorrichtung nach Anspruch 8, **dadurch gekennzeichnet, dass** eine Additionseinrichtung (+)vorgesehen ist zum Addieren der Empfangssignalmagnitude der Einhüllenden als Störpegelprobe (25) mit einem vorbestimmten Schwellwert (27), welcher vorzugsweise einen vorbestimmten Zeitverlauf, insbesondere mit dem Pulstakt (10) beaufschlagt, aufweist, zu einem resultierenden dynamischen Schwellwert (29) der Detektionseinrichtung.

10. Vorrichtung nach Anspruch 9, **dadurch gekennzeichnet, dass** ein Komparator (30) zum Erzeugen eines digitalen Detektionssignals (31) durch einen Vergleich des demodulierten Empfangssignals (21) mit dem dynamischen Schwellwert (29) der Detektionseinrichtung vorgesehen ist.

## Claims

1. Method for adapting a threshold value (29) of a detection device, preferably in an ultrasound system for detecting the area surrounding a vehicle, having the following steps of:
transmitting a signal burst (12) with a predetermined pulse repetition interval (10), a defined burst length and a defined signal frequency,
receiving and conditioning a received signal (15) by means of amplification, filtering and demodulation in order to obtain an envelope,
determining a received signal magnitude of the envelope, as an interference level sample (25), from the conditioned received signal (15) at the end of the pulse repetition interval (10) after a first predetermined period of time (Δt₁) as of a signal burst (12) within a predetermined second period of time (Δt₂), and adapting the threshold value (29) of the detection device on the basis of the interference level sample (25), **characterized in that** the received signal magnitude of the envelope is determined, as an interference level sample (25), from the envelope of the temporally windowed received signal (15) at the end of the pulse repetition interval (10) using a peak value detector (23), **in that** the peak value detector (23) has a holding time constant which is greater than the pulse repetition interval (10), and **in that** the peak value detector (23) is designed in such a manner that its charging time constant exceeds the burst length and the temporal interference level sample detection period is longer than the charging time constant.

2. Method according to one of the preceding claims, **characterized in that** a timer device (24) determines the first predetermined period of time (Δt₁), preferably 35 ms to 55 ms, which is triggered with the predetermined pulse repetition interval (10), preferably at a clock frequency of 15 Hz to 30 Hz.

3. Method according to one of the preceding claims, **characterized in that** a predetermined threshold value (27) is added to the received signal magnitude of the envelope as the determined interference level sample (25), the predetermined threshold value (27) having a time profile of programmed support points in the sense of a static characteristic curve.

4. Method according to one of the preceding claims, **characterized in that,** following amplification, the received signal (15) is filtered with a bandpass filter (17), preferably with a centre frequency at the resonant or transmitting frequency of the transducer and a pass bandwidth proportional to the reciprocal of the burst length (At), and the envelope is demodulated, in particular using a two-way rectifier (18) and a lowpass filter (19), before the interference level sample (25) is determined therefrom.

5. Apparatus for adapting a threshold value of a detection device, preferably in an ultrasound system for detecting the area surrounding a vehicle, having a transmitting/receiving device (13) for transmitting a transmission burst (14) with a predetermined pulse repetition rate (10) and a predetermined signal frequency and for receiving a received signal (15), having a signal conditioning device (16, 17, 18, 19) for conditioning the received signal (15) by means of amplification, filtering and demodulation in order to obtain an envelope, having a detection device (22, 23, 24) for determining a received signal magnitude of the envelope, as an interference level sample (25), from the received signal (15) at the end of a pulse repetition interval (10) after a first predetermined period of time (Δt₁) as of a signal burst (12) within a predetermined second period of time (Δt₂), and having a control device (26, +) for adapting the threshold value (29) of the detection device on the basis of the detected received signal magnitude of the envelope as an interference level sample (25), **characterized by** a peak value detector (23) for determining the received signal magnitude of the envelope, as an interference level sample (25), from the envelope of the temporally windowed received signal (15) at the end of the pulse repetition interval (10), the peak value detector (23) having a holding time constant which is greater than the pulse repetition interval (10), and the peak value detector (23) being designed in such a manner that its charging time constant exceeds the burst length and the temporal interference level sample detection period is longer than the charging time constant.

6. Apparatus according to Claim 5, **characterized in that** the transmitting/receiving device (13) has a transducer for emitting acoustic transmission bursts (14) at a signal frequency of between 40 kHz and 100 kHz, preferably with a pulse length of 150 µs to 500 µs and a pulse repetition rate of 10 Hz to 30 Hz, and for receiving an analogue acoustic received signal (15).

7. Apparatus according to Claim 5 or 6, **characterized in that** the peak value detector (23) determines the received signal magnitude of the envelope, as an interference level sample (25), from the received signal (15) on the basis of the enabling by a timer device (24).

8. Apparatus according to one of Claims 5-7, **characterized in that** the signal conditioning device (16, 17, 18, 19) has an amplifier device (16), a bandpass filter device (17) and a demodulation device (20) for generating a demodulated received signal (21).

9. Apparatus according to Claim 8, **characterized in that** an addition device (+) is provided for the purpose of adding the received signal magnitude of the envelope, as an interference level sample (25), to a predetermined threshold value (27), which preferably has a predetermined time profile, in particular has the pulse clock (10) applied to it, to form a resultant dynamic threshold value (29) of the detection device.

10. Apparatus according to Claim 9, **characterized in that** a comparator (30) is provided for the purpose of generating a digital detection signal (31) by comparing the demodulated received signal (21) with the dynamic threshold value (29) of the detection device.

## Revendications

1. Procédé d'adaptation d'une valeur de seuil (29) d'un dispositif de détection, de préférence dans un système à ultrasons de détection de l'environnement d'un véhicule, comprenant les étapes suivantes :
Envoi d'une salve de signal (12) avec un intervalle de répétition des impulsions (10) prédéfini, une longueur de salve donnée et une fréquence de signal donnée,
Réception et conditionnement d'un signal de réception (15) par amplification, filtrage et démodulation en vue d'obtenir une enveloppante,
Détermination d'une magnitude de signal de réception de l'enveloppante sous la forme d'un échantillon de niveau de perturbation (25) après une première durée prédéfinie (Δt₁) à partir d'une salve de signal (12) au sein d'une deuxième durée prédéfinie (Δt₂) à partir du signal de réception (15) conditionné à la fin de l'intervalle de répétition des impulsions (10) et
Adaptation de la valeur de seuil (29) du dispositif de détection en fonction de l'échantillon de niveau de perturbation (25), **caractérisé en ce que** la magnitude du signal de réception de l'enveloppante est déterminée en tant qu'échantillon de niveau de perturbation (25) à partir de l'enveloppante du signal de réception (15) découpée en créneaux temporels à la fin de l'intervalle de répétition des impulsions (10) au moyen d'un redresseur de valeur de crête (23), que le redresseur de valeur de crête (23) présente une constante de temps d'attente qui est supérieure à l'intervalle de répétition des impulsions (10) et que le redresseur de valeur de crête (23) est conçu de telle sorte que sa constante de temps de charge dépasse la durée de la salve et que la durée d'acquisition des échantillons de niveau de perturbation est supérieure à la constante de temps de charge.

2. Procédé selon l'une des revendications précédentes, **caractérisé en ce qu'**un dispositif de temporisation (24) fixe la première durée prédéfinie (Δt₁), de préférence de 35 ms à 55 ms, lequel est déclenché à l'intervalle de répétition des impulsions (10), de préférence à une fréquence d'horloge de 15 Hz à 30 Hz.

3. Procédé selon l'une des revendications précédentes, **caractérisé en ce qu'**une valeur de seuil (27) prédéfinie est additionnée à la magnitude de signal de réception de l'enveloppante sous la forme d'un échantillon de niveau de perturbation (25), la valeur de seuil (27) prédéfinie présentant une courbe dans le temps de points de référence programmés dans le sens d'une courbe statistique.

4. Procédé selon l'une des revendications précédentes, **caractérisé en ce que** le signal de réception (15) est filtré après amplification avec un filtre passe-bande (17), de préférence à une fréquence centrale calée sur la fréquence de résonance ou d'émission de l'émetteur/récepteur et ayant une fréquence passante proportionnelle à la valeur inverse de la longueur de salve (Δt) et l'enveloppante est notamment démodulée au moyen d'un redresseur à deux voies (18) et d'un filtre passe-bas (19) avant d'en déterminer l'échantillon de niveau de perturbation (25).

5. Dispositif d'adaptation d'une valeur de seuil (29) d'un dispositif de détection, de préférence dans un système à ultrasons de détection de l'environnement d'un véhicule, comprenant un dispositif d'émission/réception (13) pour envoyer une salve d'émission (14) à une fréquence de répétition d'impulsion (10) prédéfinie et une fréquence de signal prédéfinie et pour recevoir un signal de réception (15), comprenant un dispositif de conditionnement de signal (16, 17, 18, 19) pour conditionner le signal de réception (15) par amplification, filtrage et démodulation en vue d'obtenir une enveloppante, comprenant un dispositif de détection (22, 23, 24) pour déterminer une magnitude de signal de réception de l'enveloppante sous la forme d'un échantillon de niveau de perturbation (25) après une première durée prédéfinie (Δt₁) à partir d'une salve de signal (12) au sein d'une deuxième durée prédéfinie (Δt₂) à partir du signal de réception (15) à la fin de l'intervalle de répétition des impulsions (10) et comprenant un dispositif de commande (26, +) pour adapter la valeur de seuil (29) du dispositif de détection en fonction de la magnitude de signal de réception reçu de l'enveloppante sous la forme de l'échantillon de niveau de perturbation (25), **caractérisé par** un redresseur de valeur de crête (23) destiné à déterminer la magnitude du signal de réception de l'enveloppante en tant qu'échantillon de niveau de perturbation (25) à partir de l'enveloppante du signal de réception (15) découpée en créneaux temporels à la fin de l'intervalle de répétition des impulsions (10), le redresseur de valeur de crête (23) présentant une constante de temps d'attente qui est supérieure à l'intervalle de répétition des impulsions (10) et le redresseur de valeur de crête (23) étant conçu de telle sorte que sa constante de temps de charge dépasse la durée de la salve et la durée d'acquisition des échantillons de niveau de perturbation est supérieure à la constante de temps de charge.

6. Dispositif selon la revendication 5, **caractérisé en ce que** le dispositif d'émission/réception (13) présente un émetteur/récepteur pour émettre des salves d'émission acoustiques (14) à une fréquence de signal entre 40 kHz et 100 kHz, de préférence avec une longueur d'impulsion de 150 µs à 500 µs et une fréquence de répétition d'impulsion de 10 Hz à 30 Hz et pour recevoir un signal de réception (15) acoustique analogique.

7. Dispositif selon la revendication 5 ou 6, **caractérisé en ce que** le redresseur de valeur de crête (23) détermine la magnitude de signal de réception de l'enveloppante sous la forme d'un échantillon de niveau de perturbation (25) à partir du signal de réception (15) en fonction de la validation par un dispositif de temporisation (24).

8. Dispositif selon l'une des revendications 5 à 7, **caractérisé en ce que** le dispositif de conditionnement de signal (16, 17, 18, 19) présente un dispositif d'amplification (16), un dispositif de filtrage passe-bande (17) et un dispositif de démodulation (20) pour générer un signal de réception (21) démodulé.

9. Dispositif selon la revendication 8, **caractérisé en ce qu'**il est prévu un dispositif additionneur (+) pour additionner la magnitude de signal de réception de l'enveloppante sous la forme d'un échantillon de niveau de perturbation (25) à une valeur de seuil (27) prédéfinie qui présente de préférence une courbe dans le temps prédéfinie, notamment soumise à la fréquence d'impulsion (10), en vue d'obtenir une valeur de seuil dynamique (29) du dispositif de détection.

10. Dispositif selon la revendication 9, **caractérisé en ce qu'**il est prévu un comparateur (30) pour générer un signal de détection numérique (31) par une comparaison du signal de réception démodulé (21) avec la valeur de seuil dynamique (29) du dispositif de détection.
